# EUROPÄISCHE PATENTSCHRIFT

(11) **EP 1 774 394 B1**
(45) Veröffentlichungstag und Bekanntmachung des Hinweises auf die Patenterteilung: **28.12.2011**
(21) Anmeldenummer: 05774945.9
(22) Anmeldetag: 26.07.2005
(51) Int. Cl.: G02B 27/48, H04N 9/31, G03B 21/56

(54) **VORRICHTUNG UND VERFAHREN ZUR DARSTELLUNG STATISCHER ODER BEWEGTER BILDER**
DEVICE AND METHOD FOR DISPLAYING A STATIC OR MOVING PICTURE
DISPOSITIF ET PROCEDE DE REPRESENTATION D'IMAGES STATIQUES OU ANIMEES

(30) Priorität: 04.08.2004 DE 102004037999; 03.09.2004 DE 102004042648
(43) Veröffentlichungstag der Anmeldung: 18.04.2007
(73) Patentinhaber: Fraunhofer-Gesellschaft zur Förderung der angewandten Forschung e.V., 80686 München (DE)
(72) Erfinder: RICKERS, Christoph, 38124 Braunschweig (DE); FAHLAND, Matthias, 01259 Dresden (DE); VON KOPYLOW, Christian, 27412 Wilstedt (DE)
(86) Internationale Anmeldenummer: PCT/EP2005/008121
(87) Internationale Veröffentlichungsnummer: WO 2006/015722

(56) Entgegenhaltungen:
- EP-A- 1 411 732
- WO-A1-02/084380
- DE-C1- 19 645 976
- JP-A- 61 003 129
- PATENT ABSTRACTS OF JAPAN Bd. 017, Nr. 586 (P-1633), 26. Oktober 1993 (1993-10-26) -& JP 05 173094 A (SONY CORP), 13. Juli 1993 (1993-07-13)
- PATENT ABSTRACTS OF JAPAN Bd. 017, Nr. 703 (P-1666), 22. Dezember 1993 (1993-12-22) -& JP 05 241110 A (SONY CORP), 21. September 1993 (1993-09-21)
- PATENT ABSTRACTS OF JAPAN Bd. 2003, Nr. 08, 6. August 2003 (2003-08-06) -& JP 2003 098601 A (RICOH CO LTD), 4. April 2003 (2003-04-04)
- PATENT ABSTRACTS OF JAPAN Bd. 015, Nr. 309 (P-1235), 7. August 1991 (1991-08-07) -& JP 03 109591 A (SONY CORP), 9. Mai 1991 (1991-05-09)
- GOODMAN J W: "Some Fundamental Properties of Speckle" JOURNAL OF THE OPTICAL SOCIETY OF AMERICA, AMERICAN INSTITUTE OF PHYSICS. NEW YORK, US, Bd. 66, Nr. 11, November 1976 (1976-11), Seiten 1145-1150, XP002181682

## Beschreibung

Die Erfindung betrifft eine Vorrichtung und ein Verfahren zur Darstellung statischer oder bewegter Bilder mit einer Laserlichtquelle und einer Bildwand. Solche Verfahren bieten die Möglichkeit, Fotos, Videodaten oder auch Zahlenwerte auf großen Flächen darzustellen. Aufgrund der nahezu unbegrenzten Tiefenschärfe der Laserlichtquelle ist die Anwendung nicht auf ebene Bildwände beschränkt.

Die in Projektsverfahren eingesetzten Bildwände besitzen in der Regel diffus streuende, d.h. nicht spiegelnde Oberflächen. Wird eine solche Oberfläche mit dem Licht eines Lasers bestrahlt, kommt es zur Ausbildung von Speckle-Interferenzen. Speckle-Interferenzen entstehen stets dann, wenn zwei kohärente Wellenzüge des Laserlichtes an eng benachbarten Punkten reflektiert werden. Sofern diese reflektierende Struktur kleiner ist als das Auflösungsvermögen des Auges, werden diese Wellenzüge auf der Netzhaut des Betrachters in einem Punkt abgebildet und kommen dort aufgrund der hohen Kohärenzlänge des Laserlichtes zur Interferenz. Diese Interferenzen sind der Grund dafür, dass in einem gleichmäßig ausgeleuchteten Strahlfleck Helligkeitsunterschiede auftreten, welche als Körnigkeit bzw. gesprenkeltes Muster wahrgenommen werden. Sofern der Benutzer sich soweit vom Strahlfleck entfernt, dass das Muster nicht mehr aufgelöst werden kann, erscheint der Strahlfleck mit einer zeitlich variierenden bzw. pulsierenden Helligkeitsverteilung. Speckle-Interferenzen treten also stets dann auf, wenn die reflektierenden oder transmittierenden Oberflächen eine Strukturgröße im Bereich der Lichtwellenlänge aufweisen.

Für die Laserprojektion statischer oder bewegter Bilder ist in erster Linie die hohe Brillanz des Laserlichtes von Bedeutung. Als Brillanz wird in diesem Zusammenhang die Anzahl der Photonen pro Phasenraumelement verstanden, d.h. pro Wellenlängenbereich, pro Ortskoordinate und pro Raumwinkelelement. Die große Kohärenzlänge des Laserlichtes, welche den unerwünschten Speckle-Effekt verursacht, ist für Projektionsverfahren von untergeordneter Bedeutung.

Um den Speckle-Effekt zu minimieren, ist es nach dem Stand der Technik bekannt, entweder die Kohärenz des Laserlichtes aufzulösen oder durch ausreichend schnelle, zeitliche Variation der Speckle-Interferenzen innerhalb der Integrationszeit des Auges den Speckle-Kontrast zu verringern.

Ein einfaches Verfahren zur Zerstörung der Kohärenz besteht darin, das Laserlicht durch einen rotierenden Diffusor zu leiten. Als Diffusor eignet sich beispielsweise eine Glasplatte mit einer rauen Oberfläche. Sofern sich der Diffusor am Fokus des Laserstrahles befindet, werden statistische Phasenvariationen in den Strahl eingefügt während die räumliche Kohärenz erhalten bleibt. Damit kann der Strahl weiterhin auf einen Punkt fokussiert werden. Sofern der unfokussierte Strahl durch den Diffusor geleitet wird, wird sowohl die räumliche als auch die zeitliche Kohärenz aufgelöst.

Die DE 101 18 662 A1 offenbart eine Bildwand, bei welcher durch Volumenstreuung des Laserlichtes in einer auf die Bildwand aufgebrachten Schicht mit konstanter Dicke die Kohärenz des reflektierten Laserlichtes aufgelöst wird und somit der Speckle-Effekt vermieden wird. Als Streuschicht eignet sich gemäß der Lehre der DE 101 18 662 A1 beispielsweise Polytetrafluorethylen. Die Schichtdicke ist dabei an die Kohärenzlänge des Laserlichtes so angepasst, dass eine Reduktion des Speckle-Effektes um ein gewünschtes Maß eintritt. Vorteilhaft wird die Schichtdicke größer als ein Zehntel der Kohärenzlänge gewählt. Somit liefert auch diese Bildwand nur bei Laserlichtquellen mit niedriger Kohärenzlänge zufrieden stellende Ergebnisse. Nachteilig ist weiterhin, dass Änderungen an der Projektionseinheit stets auch Änderungen an der Bildwand erfordern.

Aus der US 5, 272, 473 ist bekannt, an eine Bildwand eine Schallquelle anzukoppeln, so dass die von der Schallquelle erzeugten akustischen Wellen die Bildwand zu Schwingungen anregt. Die von der schwingenden Bildwand reflektierten Wellenzüge erzeugen zu jedem Zeitpunkt unterschiedliche Speckle-Interferenzen. Sofern die Schwingungsfrequenz groß genug gewählt wird, werden diese unterschiedlichen Speckle-Interferenzen während der Integrationszeit des Auges gemittelt. Somit wird der Kontrast zwischen den Interferenzmaxima und den Interferenzminima ausgeglichen. Der Speckle-Kontrast wird somit vermindert. Der Speckle-Kontrast wird in diesem Zusammenhang definiert als die mittlere, quadratische Abweichung der Intensität eines jeden Ortes im beleuchteten Gegenstand vom Mittelwert, nominiert auf das Quadrat des Mittelwertes. Nachteilig ist diesem Verfahren ist jedoch, dass sich in der Bildwand stehende Wellen ausbilden und die Speckle-Interferenzen an den Wellenknoten der Bildwand mit unveränderter Intensität entstehen.

Aus der JP 2 000 81 602 A ist bekannt, eine Projektionsfläche zu verwenden, welche einen ähnlichen Aufbau wie ein Flüssigkristall-Display aufweist. Das eingestrahlte Laserlicht wird an den Molekülen des Flüssigkristalls ebenso wie an einer konventionellen Bildwand reflektiert. Wird jedoch an den Flüssigkristall ein hochfrequentes Niederspannungssignal angelegt, so vibrieren die Flüssigkristall-Moleküle mit der Frequenz des angelegten Signals. Dadurch werden in gleicher Weise variierende Speckle-Interferenzen erzeugt, welche wiederum während der Integrationszeit des Auges gemittelt werden. Nachteilig an diesem Verfahren zur Verhinderung von Speckle-Interferenzen ist jedoch die technologische Einschränkung hinsichtlich der Abmessungen und die Tatsache, dass derartige Bildwände nicht gebogen oder aufgerollt werden können.

Aus der JP 61 003 129 ist eine Bildwand mit reflektierenden Strukturelementen bekannt.

Der Erfindung liegt das technische Problem zugrunde, eine Vorrichtung zur Darstellung statischer oder bewegter Bilder mit einer Laserlichtquelle und einer Bildwand anzugeben, bei welcher keine Speckle-Interferenzen auftreten oder auftretende Speckle-Interferenzen soweit reduziert sind, dass diese nicht mehr störend wahrgenommen werden. Dabei soll die Bildwand hinsichtlich Form- und Größe keinen Einschränkungen unterworfen und universell mit allen Arten von Laserlichtquellen einsetzbar sein. Weiterhin sollen Speckle-Interferenzen gleichmäßig über die gesamte Fläche der Bildwand unterdrückt werden.

Darüber hinaus soll die Bildwand in einfacher Weise auch mit einer kontrasterhöhenden Beschichtung kombinierbar sein.

Die Aufgabe wird erfindungsgemäß gelöst durch eine Vorrichtung zur Darstellung statischer oder bewegter Bilder mit einer Laserlichtquelle (3) und einer Bildwand (1) gemäß Anspruch 1. Die Bildwand (1) weist eine Struktur (2) auf, bei welcher ein reflektierter Laserstrahl an der Grenzfläche zwischen Struktur und Umgebung defokussiert wird. Weiterhin besteht die Lösung der Aufgabe in einem Verfahren zur Darstellung statischer oder bewegter Bilder mit einer Laserlichtquelle und einer Bildwand gemäß Anspruch 9, bei welchem zeitgleich auf die Bildwand eintreffendes Licht in unterschiedliche Richtungen reflektiert wird.

Die erfindungsgemäße Bildwand wird als reflektierende Bildwand für Auflichtprojektion eingesetzt. Nach einer nicht erfindungsgemäßen Ausführungsform kann die Bildwand als transmittierende Bildwand für die Durchlichtprojektion eingesetzt werden. Im ersteren Fall besteht die erfindungsgemäße Struktur aus lichtundurchlässigen Elementen, welche Licht an ihrer Oberfläche reflektieren. Im letztgenannten Fall besteht die nicht erfindungsgemäße Struktur ebenso wie die Bildwand aus einem transluzenten Material, welches das in Rückprojektion eingebrachte Licht transmittiert und an seiner Oberfläche in unterschiedliche Richtungen bricht. Selbstverständlich kann die erfindungsgemäße Bildwand eine ebene Projektionsfläche aufweisen oder aber gekrümmt sein.

Durch die erfindungsgemäße Strukturierung der Bildwand wird Licht, welches auf eng benachbarte Punkte der Bildwand auftrifft in unterschiedliche Richtungen abgegeben. Der Phasenraum des von der Bildwand reflektierten Lichtes wird also in der Winkelkoordinate aufgeweitet. Somit werden zwei an benachbarter Stelle der Bildwand abgegebene Wellenzüge auf unterschiedliche Stellen der Netzhaut auftreffen und sind nicht mehr interferenzfähig. Sofern der Winkelunterschied hinreichend groß ist, kann sogar nur ein Wellenzug auf die Netzhaut auftreffen, während der andere an der Pupille ausgeblendet wird und die Netzhaut nicht ereicht. Damit wird der Speckle-Kontrast wunschgemäß verringert.

Die Struktur kann dabei ein-dimensional ausgeführt werden und sich in der zweiten Richtung in der Ebene translationsinvariant fortsetzen. Auf diese Art ergibt sich der Eindruck eines Well- oder Trapezbleches. Die Struktur kann jedoch auch in beiden Richtungen der Bildwand ausgeführt werden. In diesem Fall ergibt sich der Eindruck von auf der Oberfläche aufsitzenden Tropfen, Kugeln, Kugelkappen, Kugelscheiben, Kegeln oder beliebigen Freiformflächen. Dabei wird eine harmonische Oberflächenmodulierung eine homogene Winkelverteilung des reflektierten Lichtes und eine anharmonische Oberflächenmodulierung eine inhomogene Winkelverteilung des reflektierten Lichtes bewirken.

Das Verhältnis der Strukturbreite zum Durchmesser des Strahlquerschnittes des Lasers beträgt etwa 1:1. Das Verhältnis von Strahlfleckgröße zu Strukturbreite wird dabei derartig gewählt, dass das Laserlicht ein Strukturelement zu einem wesentlichen Teil ausleuchtet, so dass eine Breite Emission des von der Bildwand abgestrahlten Lichtes gegeben ist. Die erfindungsgemäße Wirkung wird selbstverständlich auch dann noch erzielt, wenn zwei Strukturelemente zum Teil beleuchtet werden. Zu vermeiden ist jedoch die gleichzeitige Beleuchtung mehrerer Elemente, welche wiederum zur Aussendung zweier Wellenzüge in eine Richtung führen würde.

Die Strukturbreite ist in diesem Fall definiert als die minimale Länge eines Translationsvektors, welcher in der Ebene der Bildwand liegt und ein Strukturelement in sich selbst abbildet.

Die Oberfläche der Strukturelemente selbst ist bevorzugt glatt ausgeführt, d.h. die Rauheiten sind klein gegenüber der Wellenlänge des Lasers. Besonders bevorzugt weisen die Oberflächen der Strukturen eine Rauheit von weniger als der halben Wellenlänge der Nutzfrequenz des Laserlichtes auf.

In einer bevorzugten Ausgestaltung wird die laterale Ausdehnung der Struktur in Abhängigkeit des Strahlquerschnittes und/oder der Scan-Geschwindigkeit und/oder des Strahlquerschnittes und/oder des Strahldurchmessers ausgewählt. Auf diese Weise ist sichergestellt, dass die Bedingung der Vergrößerung des Abstrahlwinkels an jedem Ort und zu jeder Zeit der Bildprojektion gewährleistet ist. Bevorzugt ist eine Struktur, welche in etwa die Größe eines Pixels aufweist. Sofern der Laserstrahl kontinuierlich über die Bildwand bewegt wird, kann die Struktur in Richtung der Bewegungsrichtung eine Ausdehnung aufweisen, welche durch die Geschwindigkeit des Laserstrahles und die Pixelfrequenz bestimmt wird. Dadurch erhält die Bildwand eine asymmetrische Strukturierung. In einer Ausführungsform der Erfindung zeigt der Strukturierung in horizontaler Richtung Abmaße von einigen hundert µm und in vertikaler Richtung Abmaße von einigen zehn µm.

Bei der erfindungsgemäßen Strukturierung handelt es sich also um eine Anordnung einer Vielzahl von Spiegeln, welche so ausgestaltet und angeordnet sind, dass die Interferenz im Auge des Betrachters vermieden wird. Gleichwohl handelt es sich bei dem reflektierten Licht nach wie vor um kohärente Laserstrahlung. Vorteilhafterweise wird bei dem erfindungsgemäßen Projektionsschirm eine Streuung im Volumen der Bildwand vermieden und das Bild erreicht eine im Vergleich zum Stand der Technik erhöhte Schärfe und Kontrast.

Durch das Verhältnis der Höhe der Struktur zu deren Breite kann der Emissionswinkel der erfindungsgemäßen Bildwand in weiten Bereichen eingestellt werden. Besonders bevorzugt ist ein Höhen- zu Bereitenverhältnis von etwa 1:8 bis etwa 1:37. In diesem Fall wird ein senkrecht auf die Bildwand eintreffender Lichtstrahl um maximal etwa ± 40° bis maximal etwa ± 10° abgelenkt. Der größere Ablenkwinkel eignet sich dabei prinzipiell für Bildwände, welche von einem größeren Zuschauerkreis betrachtet werden, wie beispielsweise Kino- oder Videoleinwände.

Durch Verkleinern des Höhen- zu Breitenverhältnisses wird der Abstrahlwinkel der Bildwand auf etwa ± 10° verringert. Solche Bildwände eignen sich beispielsweise für Head-up-Displays, welche nur einen beschränkten Adressatenkreis ansprechen und die Umgebung unbelästigt lassen sollen.

Selbstverständlich kann durch asymmetrische Strukturierung auch eine Bildwand mit asymmetrischer Emission erzielt werden, welche beispielsweise weniger Licht an die Raumdecke und den Boden lenkt und dennoch einen breiten Betrachtungswinkel in der Horizontalen erlaubt.

In besonders einfacher Weise kann die erfindungsgemäße Struktur durch Laminieren einer Folie auf einen als Bildwand dienenden Träger hergestellt werden. Die Folie kann dabei beispielsweise durch Prägen mit einer Prägewalze hergestellt werden. Der Fachmann wird dabei selbstverständlich auch in Betracht ziehen, bei entsprechend weichen Trägermaterialien diese direkt durch eine Prägewalze oder auch eine plane Matrix durch Abformen zu strukturieren.

Weitere Herstellungsverfahren der erfindungsgemäßen strukturierten Bildwand sind Sputter- oder Auf-dampfprozesse, galvanische Verfahren, aufpinseln, aufrakeln, aufsprühen oder Eintauchen des Substratmaterials.

In diesem Fall können die Strukturen durch Schablonen oder durch strukturierte Fotolackmasken auf dem Substrat erzeugt werden. Alternativ kann eine Laser-Strukturierung oder ein selektiver Ätzprozess verwendet werden. Aus den genannten Strukturierungsverfahren wird der Fachmann in Abhängigkeit der Strukturgröße das jeweils am besten geeignete Verfahren aussuchen.

Auf die erfindungsgemäße Struktur kann fakultativ eine Beschichtung aufgebracht werden. Dies ist beispielsweise durch Sputter- oder Spin-Coating-Verfahren in einfacher Weise auch auf großen Flächen möglich. Die konturgenaue Beschichtung der strukturierten Bildwand kann deren Eigenschaften weiter verbessern, in dem beispielsweise Spiegelungen reduziert oder der Kontrast erhöht werden.

Besonders bevorzugt ist die Beschichtung der strukturierten Bildwand eine spektral selektiv reflektierende Beschichtung, insbesondere eine Beschichtung gemäß der DE 199 01 970 C2 oder gemäß der DE 197 47 597 A1. Diese Beschichtungen reflektieren selektiv das schmalbandige, eingestrahlte Laserlicht und absorbieren oder transmittieren einen Großteil des breitbandigen Umgebungslichtes. Somit wird der Kontrast der projizierten Informationen wunschgemäß erhöht. Dies ist insbesondere deshalb vorteilhaft, weil die erzielbaren Leuchtstärken der Laserlichtquellen nicht mit denen konventioneller Projektionslampen, wie beispielsweise Halogen- oder Hochdruck-Gasentladungslampen, konkurrieren können.

Nachfolgend soll die Erfindung anhand dreier Figuren näher erläutert werden.
Figur 1 zeigt eine erfindungsgemäße strukturierte Bildwand bei Beleuchtung mit einer Laserlichtquelle.
Figur 2 zeigt mögliche Strukturformen im Profil.
Figur 3 zeigt mögliche Anordnungen der Strukturelemente.

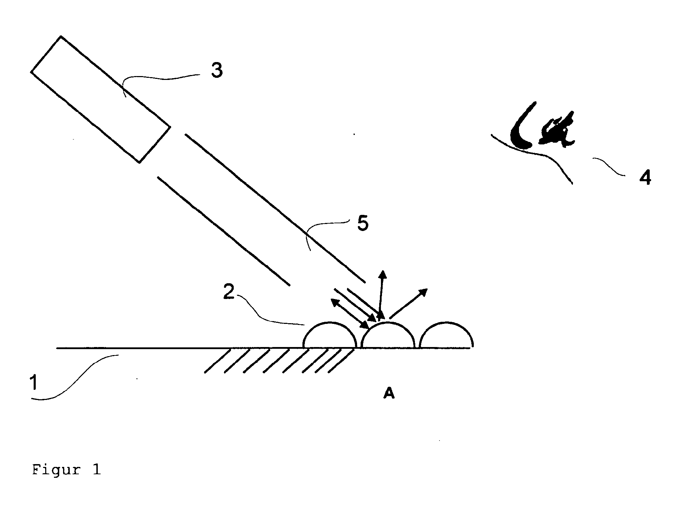

In Figur 1 ist eine Bildwand 1 mit einer erfindungsgemäßen Strukturierung 2 dargestellt. Die Strukturelemente sind in diesem Beispiel halbkugelförmig auf die Bildwand 1 aufgebracht. Die erfindungsgemäße Bildwand wird mit einer Laserlichtquelle 3 beleuchtet. Dabei ist die Größe der Strukturelemente 2 dergestalt gewählt, dass der Strahlkegel 5 mehrere Strukturelemente 2 beleuchtet. Das Laserlicht wird an der Oberfläche der Strukturelemente 2 reflektiert. Aufgrund der Krümmung der Oberfläche wird das Licht von benachbarten Auftreffpunkten in unterschiedliche Richtungen reflektiert. Daher erreichen Wellenzüge von benachbarten Auftreffpunkten entweder nur das Auge eines Betrachters 4 oder aber innerhalb des Auges eines Betrachters unterschiedliche Punkte der Netzhaut. Somit ist eine Interferenz dieser Wellenzüge nicht mehr möglich und die Speckle-Interferenzen werden wunschgemäß unterdrückt.

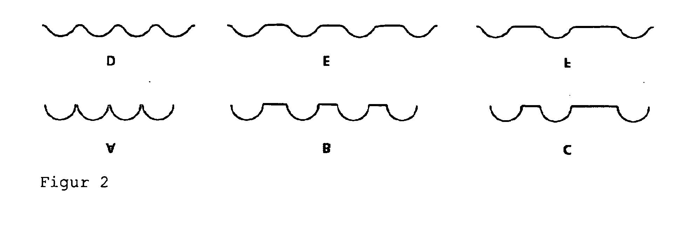

Figur 2 zeigt mögliche Strukturformen im Profil. Dabei ist in Beispiel A eine Struktur dargestellt, welche aus dicht aneinandergereihten Kugelkappen besteht. Erfindungsgemäß ist es jedoch auch möglich, diese Kugelkappen in regelmäßigen, größeren Abständen anzuordnen wie in Beispiel B gezeigt.

Beispiel C zeigt Strukturelemente mit unregelmäßigen Abständen. Sofern die Abstandsflächen zwischen den Strukturelementen im Beispiel B und C nicht plan ausgeführt werden, ergibt sich eine Wellenstruktur nach Beispiel D. Eine solche Wellenstruktur kann sowohl eindimensional nach Art eines Wellblechs als auch zweidimensional, etwa wie eine Eierschachtel, ausgeführt werden. Die Figuren I und F zeigen Strukturen, deren erhabene Anteile eine Wellen, d.h. eine Sinus-Form, aufweisen, wo hingegen die negativen Strukturen durch Plane Flächenelemente ersetzt sind.

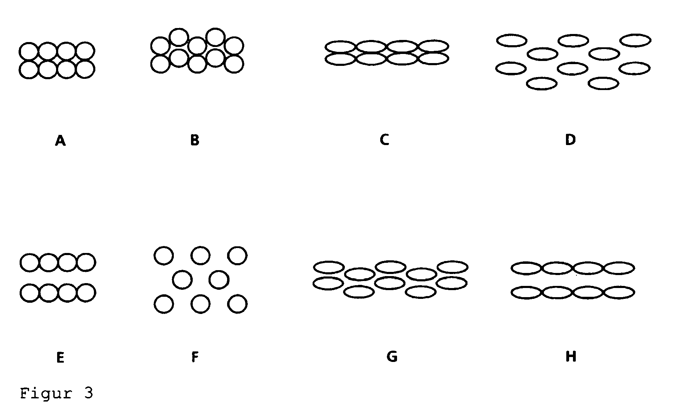

Figur 3 zeigt die erfindungsgemäßen Strukturelemente in der Aufsicht. Bei allen in Figur 3 dargestellten Ausführungsbeispielen handelt es sich um zweidimensionale Strukturen, welche Speckle-Interferenzen unter allen Betrachtungswinkeln reduzieren. In Beispiel A sind runde Strukturelemente, etwa Kugel- oder Sinusförmige Strukturelemente, dargestellt, welche durch einfache Translation der Elemente um jeweils eine Strukturbreite aneinandergereiht sind. Beispiel B zeigt identische Strukturelemente, jedoch um eine halbe Elementbreite in einer Richtung versetzt, so dass sich die dichtest mögliche Packung von Strukturelementen pro Flächenelement ergibt. Die beabstandete Anordnung von Strukturelementen, welche in Figur 2 E, 2 C, 2 E und 2 F dargestellt war, bildet im Aufriss die Figuren 3 E und 3F.

In Abhängigkeit des gewünschten Abstrahlwinkels sind auch asymmetrische Anordnungen von Strukturelementen denkbar, welche in einer Abstrahlrichtung einen großen Betrachtungswinkel erlauben, in einer anderen Abstrahlrichtung jedoch nur einen deutlich eingeschränkten Abstrahlwinkel aufweisen. Solche Strukturelemente sind in Figur 3 C, 3 D, 3 G und 3 H dargestellt. Wiederum zeigt Figur 3 C die Anordnung von Strukturelementen, welche um ein Strukturelement versetzt sind, analog zu Figur 3 A. Die dichtest mögliche Packung, analog zu Figur 3 B ist in Figur 3 G dargestellt. Selbstverständlich können auch diese asymmetrischen Strukturelemente beabstandet angeordnet werden, wie in Figur 3 D und 3 H dargestellt.

## Patentansprüche

1. Vorrichtung zur Darstellung statischer oder bewegter Bilder, mit einer Laserlichtquelle (3) und einer Bildwand (1), welche eine Anordnung von Strukturelementen (2) in Form von Spiegeln aufweist, welche Licht an ihrer Oberfläche reflektieren, wobei die Spiegel so ausgestaltet und angeordnet sind, dass die Interferenz im Auge des Betrachters vermieden wird, wobei der Lichtstrahl der Laserlichtquelle (3) über die Bildwand bewegbar ist,
wobei
das Verhältnis der Strukturbreite der Strukturelemente (2) zur Strahlfleckgröße des Lasers etwa 1:1 beträgt, so dass mit dem Strahlfleck des Lasers ein einzelnes Strukturelement zu einem wesentlichen Teil ausleuchtbar ist, wobei
aufgrund einer Krümmung der Oberfläche der Strukturelemente (2) Licht von benachbarten Auftreffpunkten in unterschiedliche Richtungen reflektiert wird, und
die Bildwand (1) so ausgebildet ist, dass das reflektierte Licht nicht im Volumen der Bildwand gestreut wird.

2. Vorrichtung nach Anspruch 1, **dadurch gekennzeichnet, dass** die Struktur (2) eine periodische Struktur umfasst.

3. Vorrichtung nach einem der Ansprüche 1 bis 2, **dadurch gekennzeichnet, dass** das Verhältnis der Höhe der Struktur zu deren Breite etwa 1:8 bis etwa 1:37 beträgt.

4. Vorrichtung nach einem der Ansprüche 1 bis 3, **dadurch gekennzeichnet, dass** die Struktur Kugelkappen und/oder Kugelscheiben und/oder Kegel und/oder Kegelstümpfe und/oder Rotationsparaboloide und/oder Rotationshyperboloide und/oder Rotationsellipsoide umfasst.

5. Vorrichtung nach einem der Ansprüche 1 bis 4, **dadurch gekennzeichnet, dass** die Struktur durch Laminieren einer Folie auf einen Träger erhältlich ist.

6. Vorrichtung nach einem der Ansprüche 1 bis 5, **dadurch gekennzeichnet, dass** die Struktur durch Abformen erhältlich ist.

7. Vorrichtung nach einem der Ansprüche 1 bis 6, **dadurch gekennzeichnet, dass** auf der Struktur eine Beschichtung vorgesehen ist.

8. Vorrichtung nach Anspruch 7, **dadurch gekennzeichnet, dass** die Beschichtung eine spektral selektive Reflexion bewirkt.

9. Verfahren zur Darstellung statischer oder bewegter Bilder mit einer Laserlichtquelle (3) und einer Bildwand (1), welche mehrere Strukturelemente (2) in Form von Spiegeln aufweist, welche Licht an ihrer Oberfläche reflektieren, wobei die Spiegel so ausgestaltet und angeordnet sind, dass die Interferenz im Auge des Betrachters vermieden wird, wobei der Laserstrahl über die Bildwand bewegt wird, wobei zu einem vorgebbaren Zeitpunkt das Laserlicht ein Strukturelement (2) zu einem Wesentlichen Teil ausleuchtet oder zwei Strukturelemente teilweise beleuchtet werden, so dass die gleichzeitige vollständige Beleuchtung mehrerer Strukturelemente (2) vermieden wird, wobei aufgrund einer Krümmung der Oberfläche der Strukturelemente (2) Licht von benachbarten Auftreffpunkten in unterschiedliche Richtungen reflektiert wird und das von der Bildwand reflektierte Licht nicht im Volumen der Bildwand gestreut wird.

10. Verfahren nach Anspruch 9, **dadurch gekennzeichnet, dass** zeitgleich auf die Bildwand eintreffendes Licht in mindestens einer Ebene in einen maximalen Winkelbereich von etwa ± 40° reflektiert wird.

11. Verfahren nach Anspruch 10, **dadurch gekennzeichnet, dass** zeitgleich auf die Bildwand eintreffendes Licht in mindestens einer Ebene in einen maximalen Winkelbereich von etwa ± 10° reflektiert wird.

12. Verfahren nach einem der Ansprüche 9 bis 11, **dadurch gekennzeichnet, dass** das Verhältnis der Strukturbreite der Struktur (2) zum Durchmesser des Strahlquerschnittes des Lasers etwa 1:1 beträgt.

13. Verfahren nach einem der Ansprüche 9 bis 12, **dadurch gekennzeichnet, dass** das die Strukturelemente (2) mit einer spektral selektiven Beschichtung versehen sind.

## Claims

1. Device for displaying static or moving images, comprising a laser light source (3) and a screen (1), which has an arrangement of structure elements (2) in the form of mirrors which reflect light at their surface, wherein the mirrors are configured and arranged in such a way that interference in the eye of the observer is avoided, wherein the light beam from the laser light source (3) is movable over the screen,
wherein
the ratio of the structure width of the structure elements (2) to the beam spot size of the laser is approximately 1:1, such that a substantial part of an individual structure element can be illuminated by the beam spot from the laser, wherein
on account of a curvature of the surface of the structure elements (2), light is reflected from adjacent impingement points in different directions, and
the screen (1) is embodied such that the reflected light is not scattered in the volume of the screen.

2. Device according to Claim 1, **characterized in that** the structure (2) comprises a periodic structure.

3. Device according to either of Claims 1 and 2, **characterized in that** the ratio of the height of the structure to the width thereof is approximately 1:8 to approximately 1:37.

4. Device according to any of Claims 1 to 3, **characterized in that** the structure comprises spherical caps and/or spherical discs and/or cones and/or truncated cones and/or paraboloids of revolution and/or hyperboloids of revolution and/or ellipsoids of revolution.

5. Device according to any of Claims 1 to 4, **characterized in that** the structure is obtainable by laminating a film onto a carrier.

6. Device according to any of Claims 1 to 5, **characterized in that** the structure is obtainable by impressing.

7. Device according to any of Claims 1 to 6, **characterized in that** a coating is provided on the structure.

8. Device according to Claim 7, **characterized in that** the coating effects a spectrally selective reflection.

9. Method for displaying static or moving images with a laser light source (3) and a screen (1), which has a plurality of structure elements (2) in the form of mirrors which reflect light at their surface, wherein the mirrors are configured and arranged such that interference in the eye of the observer is avoided, wherein the laser beam is moved over the screen, wherein
at a predeterminable point in time, the laser light illuminates a substantial part of a structure element (2) or two structure elements are partly illuminated, such that the simultaneous complete illumination of a plurality of structure elements (2) is avoided, wherein, on account of a curvature of the surface of the structure elements (2), light is reflected from adjacent impingement points in different directions and the light reflected from the screen is not scattered in the volume of the screen.

10. Method according to Claim 9, **characterized in that** light incident on the screen simultaneously in at least one plane is reflected into a maximum angle range of approximately ± 40°.

11. Method according to Claim 10, **characterized in that** light incident on the screen simultaneously in at least one plane is reflected into a maximum angle range of approximately ± 10°.

12. Method according to any of Claims 9 to 11, **characterized in that** the ratio of the structure width of the structure (2) to the diameter of the beam cross section of the laser is approximately 1:1.

13. Method according to any of Claims 9 to 12, **characterized in that** the structure elements (2) are provided with a spectrally selective coating.

## Revendications

1. Dispositif pour représenter des images statiques ou animées, comprenant une source de lumière laser (3) et un écran (1), lequel présente un arrangement d'éléments structurels (2) sous la forme de miroirs, lesquels réfléchissent la lumière sur leur surface, les miroirs étant configurés et disposés de telle sorte que les interférences dans l'oeil de l'observateur sont évitées, le rayon de lumière de la source de lumière laser (3) pouvant être déplacé sur l'écran, le rapport entre la largeur de structure des éléments structurels (2) et la taille du spot lumineux du laser est d'environ 1:1, de sorte qu'il est possible avec le spot lumineux du laser d'éclairer en grande partie un élément structurel unique, la lumière des points d'incidence voisins étant réfléchie dans différentes directions en raison de la courbure de la surface des éléments structurels (2) et l'écran (1) étant configuré de telle sorte que la lumière réfléchie n'est pas dispersée dans le volume de l'écran.

2. Dispositif selon la revendication 1, **caractérisé en ce que** la structure (2) comprend une structure périodique.

3. Dispositif selon l'une des revendications 1 à 2, **caractérisé en ce que** le rapport entre la hauteur de la structure et sa largeur est d'environ 1:8 à environ 1:37.

4. Dispositif selon l'une des revendications 1 à 3, **caractérisé en ce que** la structure comprend des calottes sphériques et/ou des disques sphériques et/ou des cônes et/ou des cônes tronqués et/ou des paraboloïdes de révolution et/ou des hyperboloïdes de révolution et/ou des ellipsoïdes de révolution.

5. Dispositif selon l'une des revendications 1 à 4, **caractérisé en ce que** la structure peut être obtenue par laminage d'un film sur un support.

6. Dispositif selon l'une des revendications 1 à 5, **caractérisé en ce que** la structure peut être obtenue par façonnage.

7. Dispositif selon l'une des revendications 1 à 6, **caractérisé en ce qu'**un revêtement est prévu sur la structure.

8. Dispositif selon la revendication 7, **caractérisé en ce que** le revêtement produit une réflexion à sélectivité spectrale.

9. Procédé pour représenter des images statiques ou animées avec une source de lumière laser (3) et un écran (1), lequel présente plusieurs éléments structurels (2) sous la forme de miroirs, lesquels réfléchissent la lumière sur leur surface, les miroirs étant configurés et disposés de telle sorte que les interférences dans l'oeil de l'observateur sont évitées, le rayon laser étant déplacé sur l'écran, la lumière laser éclairant en grande partie un élément structurel (2) ou deux éléments structurels étant éclairés partiellement à un instant pouvant être prédéfini, de manière à éviter l'éclairage complet simultané de plusieurs éléments structurels (2), la lumière des points d'incidence voisins étant réfléchie dans différentes directions en raison d'une courbure de la surface des éléments structurels (2) et la lumière réfléchie par l'écran n'étant pas dispersée dans le volume de l'écran.

10. Procédé selon la revendication 9, **caractérisé en ce que** la lumière incidente sur l'écran est simultanément réfléchie dans au moins un plan dans une plage angulaire maximale d'environ ±40°.

11. Procédé selon la revendication 10, **caractérisé en ce que** la lumière incidente sur l'écran est simultanément réfléchie dans au moins un plan dans une plage angulaire maximale d'environ ±10°.

12. Procédé selon l'une des revendications 9 à 11, **caractérisé en ce que** le rapport entre la largeur de structure de la structure (2) et le diamètre de la section transversale du rayon du laser est d'environ 1:1.

13. Procédé selon l'une des revendications 9 à 12, **caractérisé en ce que** les éléments structurels (2) sont munis d'un revêtement à sélectivité spectrale.
